# EUROPEAN PATENT SPECIFICATION

(11) **EP 3 086 543 B1**
(45) Date of publication and mention of the grant of the patent: **18.09.2019**
(21) Application number: 16166021.2
(22) Date of filing: 19.04.2016
(51) Int. Cl.: H04N 1/44

(54) **FACSIMILE DEVICE, FACSIMILE COMMUNICATION SYSTEM, AND FACSIMILE DEVICE CONTROL METHOD**
FAKSIMILEVORRICHTUNG, FAKSIMILEÜBERTRAGUNGSSYSTEM UND FAKSIMILEVORRICHTUNGSTEUERUNGSVERFAHREN
DISPOSITIF DE TÉLÉCOPIE, SYSTÈME DE COMMUNICATION PAR TÉLÉCOPIE ET PROCÉDÉ DE COMMANDE DE DISPOSITIF DE TÉLÉCOPIE

(30) Priority: 24.04.2015 JP 2015089510
(43) Date of publication of application: 26.10.2016
(73) Proprietor: Kyocera Document Solutions Inc., Osaka-shi, Osaka 540-8585 (JP)
(72) Inventor: Shigee, Yuki, Osaka, 540-8585 (JP)
(74) Representative: Beetz & Partner mbB

(56) References cited:
- WO-A1-98/47261
- US-A1- 2002 024 684
- US-A1- 2009 136 032

## Description

### BACKGROUND

This disclosure relates to encryption and decryption in facsimile devices and facsimile communication systems.

In facsimile devices, encrypted image data may be transmitted in order to prevent transmitted images from being known or being falsified (i.e., to ensure their confidentiality). For encrypted communications, one identical key may be stored in a transmission-side facsimile device and a reception-side facsimile device. However, since the encryption key and the decryption key are in common to each other, leakage of the key to the external may cause the encryption to be decrypted by third parties.

With regard to the issue of key leaks, the following techniques have been known. Specifically, a facsimile device is known which, having a key table including a plurality of encryption keys, performs the steps of: determining a key for use in communications from among the key table by using the month and date on occasions of transmission; encrypting image information by using the selected key; determining a key for use in communications from among the key table by using the month and date on occasions of reception; and decrypting the encryption of received image information by using the selected key. With this arrangement, a key is determined by the month and date so as to enhance the confidentiality.

When a key for encrypted communication is stored in a facsimile device, there is a need for preventing the key (data representing the key) from being leaked. However, because of a possibility that the key information may be intercepted or stolen, it cannot be absolutely impossible that the key may be leaked to the external. Accordingly, there is an issue that it should be made impossible to decrypt the encryption only by the key stored in the facsimile device even though the key information is leaked. As a countermeasure, it would be conceivable to adopt complex encryption algorithms or the like. However, this may involve increases in encryption and decryption throughput (computing throughput), requiring long time for encryption and decryption. Thus, it is preferable that the arithmetic processing required for encryption and decryption be reduced to a minimum, thereby saving the processing time.

With the above-described well-known technique, a key to be used for communications is determined by using the month and date from the key table including a plurality of keys. However, when the transmission-side facsimile device and the reception-side facsimile device differ in time information (set time) from each other, correct decryption in some cases cannot be achieved because of inconsistency between the transmission-side key and the reception-side key. In addition, the number of storable keys is limited, so that usable keys are limited to those within the key table. Due to these reasons, trials for decryption by using one key after another from within the key table makes it possible to solve the encryption eventually. Therefore, with the above known technique, acquiring the key table itself allows contents of cryptographic communications to be known with simplicity. Thus, the issue described above cannot be solved.

US 2002/024684 A1 teaches a technology for generating an encryption key by using ID information. The ID information includes a name, an address and a telephone number. This document teaches that an entity X, such as a server, generates an encryption key based on secret information, based on entity X's ID information, center public information and an entity Y's information.

WO 98/47261 A1 describes a transmission-side device that prints a document in which each character is encrypted based on an encryption program. Transmitting a facsimile is based on data obtained by reading such a printed document. A reception-side device subjects the received data to OCR processing, and the data obtained through the OCR processing is decrypted.

### SUMMARY

A facsimile device according to one aspect of this disclosure includes an operation part, a storage part, a transmission data generation part, an encryption key generation part, an encryption part, and a communication part. The operation part accepts settings relating to cryptographic communication. The storage part stores the same common key as in the reception-side facsimile device. The transmission data generation part generates message data by subjecting image data to encoding process for facsimile transmission. The encryption key generation part generates an encryption key by selecting, as a cryptograph-generation applied signal(s), one or plural kinds of signals from among signals received from the reception-side facsimile device and notifies a number or function of the reception-side facsimile device and moreover performs a first arithmetic operation with use of the common key and a signal value of the cryptograph-generation applied signal. The encryption part generates encrypted data by performing encryption of the message data with use of the encryption key generated by the encryption key generation part. The communication part performs transmission and reception of signals with the reception-side facsimile device before start of message transmission and moreover transmits the encrypted data and decryption information including information indicative of a kind of the cryptograph-generation applied signal to the reception-side facsimile device, wherein the operation part displays a crypto-communication setting screen and accepts a setting of a level in cryptographic communication based on operation in the crypto-communication setting screen, the transmission data generation part generates message data including an error detecting code, given a setting in the operation part that cryptographic communication is executed at a predetermined middle level, the encryption key generation part generates an encryption key by performing the first arithmetic operation with use of the common key and the signal value of the cryptograph-generation applied signal, the communication part transmits, to the reception-side facsimile device, the decryption information including information indicative of the kind of the cryptograph-generation applied signal, given a setting in the operation part that cryptographic communication of a level higher than the predetermined middle level is executed, the encryption key generation part generates an encryption key by performing a second arithmetic operation with use of the common key, the signal value of the cryptograph-generation applied signal and the value of the error detecting code within the message data, and the communication part transmits, to the reception-side facsimile device, the decryption information including information indicative of the kind of the cryptograph-generation applied signal and information indicative of the value of the error detecting code used for generation of the encryption key.

Further features and advantages of this disclosure will become more apparent from the description of embodiments given below.

### BRIEF DESCRIPTION OF THE DRAWINGS

FIG. 1 is a view showing an example of a facsimile communication system according to an embodiment;
FIG. 2 is a chart showing an example of a multifunctional peripheral according to an embodiment;
FIG. 3 is a chart showing an example of part relating to facsimile communications in the multifunctional peripheral of the embodiment;
FIG. 4 is a chart showing an example of coded data (message data);
FIG. 5 is a chart showing an example of a basic flow of facsimile communications;
FIGs. 6A and 6B are charts each showing an example of the flow of transmission processing in cryptographic communications of the multifunctional peripheral according to the embodiment;
FIG. 7 is a chart showing an example of a crypto-communication setting screen according to the embodiment;
FIG. 8 is a chart showing an example of a keyword registration screen according to the embodiment; and
FIG. 9 is a chart showing an example of the flow of reception processing in cryptographic communications of the multifunctional peripheral according to the embodiment.

### DETAILED DESCRIPTION

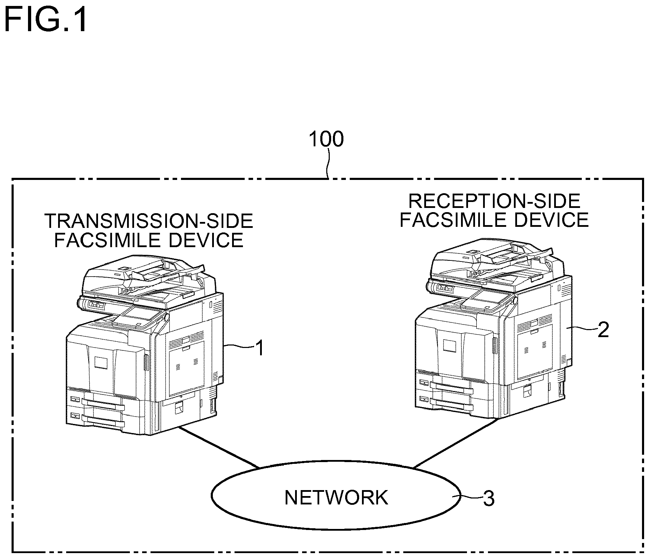

This disclosure is so designed as to make it impossible to decrypt contents of cryptographic communications merely with the common key only even though key information (common key) possessed in common to the transmission side and the reception side is leaked. Hereinbelow, an embodiment of this disclosure will be described with reference to FIGS. 1 to 9. The following description will be given on a multifunctional peripheral 1 as an example of a transmission-side facsimile device according to this disclosure as well as a multifunctional peripheral 2 as a reception-side facsimile device. It is noted that individual component elements of construction, placement or the like described in this embodiment are no more than explanatory examples, not limiting the scope of the disclosure.

### (Outline of facsimile communication system 100)

First, a facsimile communication system 100 including the multifunctional peripheral 1 one another the embodiment will be described in outline with reference to FIG. 1.

The facsimile communication system 100 shown in FIG. 1 includes a transmission-side multifunctional peripheral 1 and a reception-side multifunctional peripheral 2 both connected to a network 3. In the following description, the multifunctional peripheral 1 and the multifunctional peripheral 2 are of the same type (same model) as an explanatory example. Therefore, the transmission-side multifunctional peripheral 1 can operate as a reception-side multifunctional peripheral 2. Also, the reception-side multifunctional peripheral 2 can operate as a transmission-side multifunctional peripheral 1.

Although the multifunctional peripheral 1 and the multifunctional peripheral 2 are of the same model and therefore of the same construction, yet those devices differ from each other between transmission-side and reception-side operations. Accordingly, for the sake of identification, members of the multifunctional peripheral 1 and members of the multifunctional peripheral 2 will be designated by different reference signs. In addition, the transmission-side facsimile device and the reception-side facsimile device may be of different types and moreover may be facsimile-communication exclusive machines other than multifunctional peripherals. Also in the following description, a case in which the multifunctional peripheral 1 and the multifunctional peripheral 2 perform facsimile communications in conformity to ITU-T recommendation T.30 (so-called G3 facsimile) will be explained.

Both the transmission-side multifunctional peripheral 1 and the reception-side multifunctional peripheral 2 have such multiple functions as printing function, scanning function and transmission function. Then, the multifunctional peripheral 1 transmits to the multifunctional peripheral 2 data based on image data of a document acquired (read) by using the scanning function, and the multifunctional peripheral 2 receives these data (facsimile communication).

### (Outline of multifunctional peripheral 1 and the multifunctional peripheral 2)

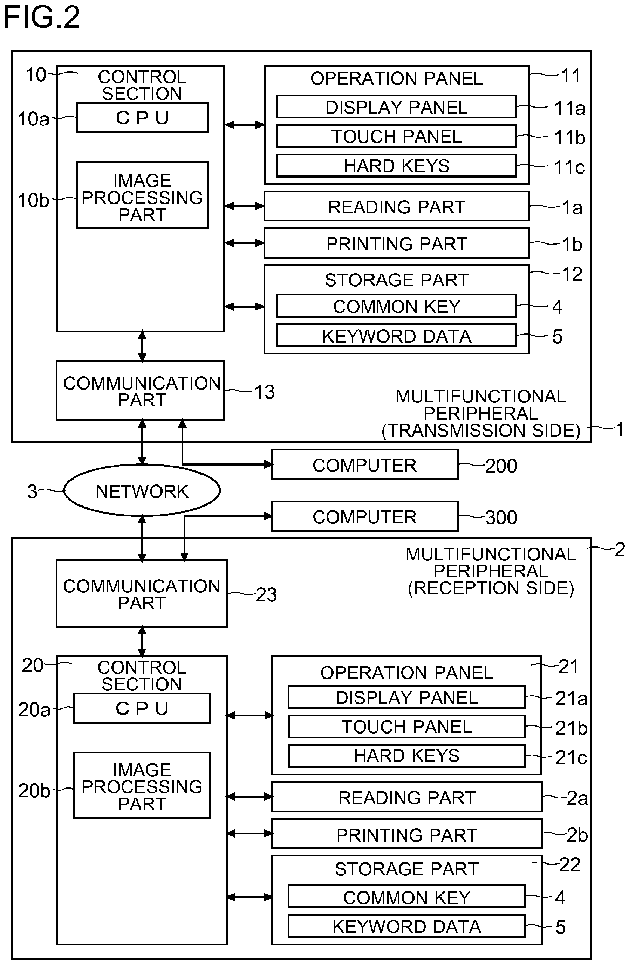

Next, outlines of the multifunctional peripherals 1, 2 according to the embodiment will be described with reference to FIG. 2.

First, the transmission-side multifunctional peripheral 1 will be described. The multifunctional peripheral 1 includes an operation panel 11 (corresponding to operation part) attached on a front surface, a reading part 1a, a printing part 1b. The operation panel 11 has a display panel 11a for displaying a message and a setting screen. The operation panel 11 also includes a touch panel 11b (corresponding to operation part) and hard keys 11c (corresponding to operation part) provided for the display panel 11a. By operating the touch panel 11b or the hard keys 11c, a user can fulfill various types of settings relating to transmission, document reading and printing conditions such as crypto-communication-related setting, transmission method, address, paper sheet type, and document type.

The reading part 1 a reads a document to be conveyed or a document set on a document base to generate image data of the document. The printing part 1b includes a sheet feed part, a conveyance part, an image forming part, and a fixing part. The sheet feed part performs sheet feeding, the conveyance part conveys sheets in machine, the image forming part forms a toner image and transfers the toner image to a sheet, and the fixing part fixes the toner image onto the sheet.

The multifunctional peripheral 1 includes a control section 10 (corresponding to decision section). The control section 10 controls individual parts of the multifunctional peripheral 1 such as the operation panel 11, the reading part 1a and the printing part 1b. The control section 10 also includes a CPU 10a (corresponding to decision section) as well as electronic circuits and devices such as an image processing part 10b for performing various types of image processing. The CPU 10a performs control and arithmetic operations over individual parts of the multifunctional peripheral 1 based on control-dedicated programs and data stored in a storage part 12. The storage part 12 is made up by a combination of such storage devices as ROM, flash ROM, RAM and HDD.

A communication part 13 (communication interface) is connected to the control section 10. The control section 10 controls operation and communication processing of the communication part 13. The communication part 13 is a circuit for performing communications with the reception-side multifunctional peripheral 2 or a computer 200 (PC or server). The communication part 13 transmits data to the reception-side multifunctional peripheral 2 via the network 3 (facsimile transmission). Also, the communication part 13 is enabled to receive data from the computer 200 and other facsimile devices. Then, the control section 10 instructs the printing part 1b to perform printing based on the received data (printer function, facsimile reception).

The reception-side multifunctional peripheral 2 will be described. The multifunctional peripheral 2 includes an operation panel 21 (corresponding to operation part) attached on a front surface, a reading part 2a, a printing part 2b. The operation panel 21 has a display panel 21a for displaying a message and a setting screen. The operation panel 21 also includes a touch panel 21b and hard keys 21c provided for the display panel 21a. By operating the touch panel 21b or the hard keys 21c, a user can fulfill various types of settings relating to transmission, document reading and printing conditions such as crypto-communication-related setting, transmission method, address, paper sheet type, and document type.

The reading part 2a reads a document to be conveyed or a document set on a document base to generate image data of the document. The printing part 2b includes a sheet feed part, a conveyance part, an image forming part, and a fixing part. The sheet feed part performs sheet feeding, the conveyance part conveys sheets in machine, the image forming part forms a toner image and transfers the toner image to a sheet, and the fixing part fixes the toner image onto the sheet.

The multifunctional peripheral 2 includes a control section 20. The control section 20 controls individual parts of the multifunctional peripheral 2 such as the operation panel 21, the reading part 2a and the printing part 2b. The control section 20 also includes a CPU 20a as well as electronic circuits and devices such as an image processing part 20b for performing various types of image processing. The CPU 20a performs control and arithmetic operations over individual parts of the multifunctional peripheral 2 based on control-dedicated programs and data stored in a storage part 22. The storage part 22 is made up by a combination of such storage devices as ROM, flash ROM, RAM and HDD.

A communication part 23 (communication interface) is connected to the control section 20. The control section 20 controls operation and communication processing of the communication part 23. The communication part 23 is a circuit for performing communications with the transmission-side multifunctional peripheral 1 or a computer 300 (PC or server). More specifically, the communication part 23 receives data from the transmission-side multifunctional peripheral 1 via the network 3 (facsimile reception). Also, the communication part 23 is enabled to receive data from the computer 300 and other facsimile devices. Then, the control section 20 instructs the printing part 2b to perform printing based on the received data (printer function, facsimile reception). The communication part 23 is also enabled to transmit data toward other facsimile devices (the multifunctional peripheral 2 is enabled to function as a transmission-side facsimile device).

### (Facsimile communication-related part of the multifunctional peripheral 1)

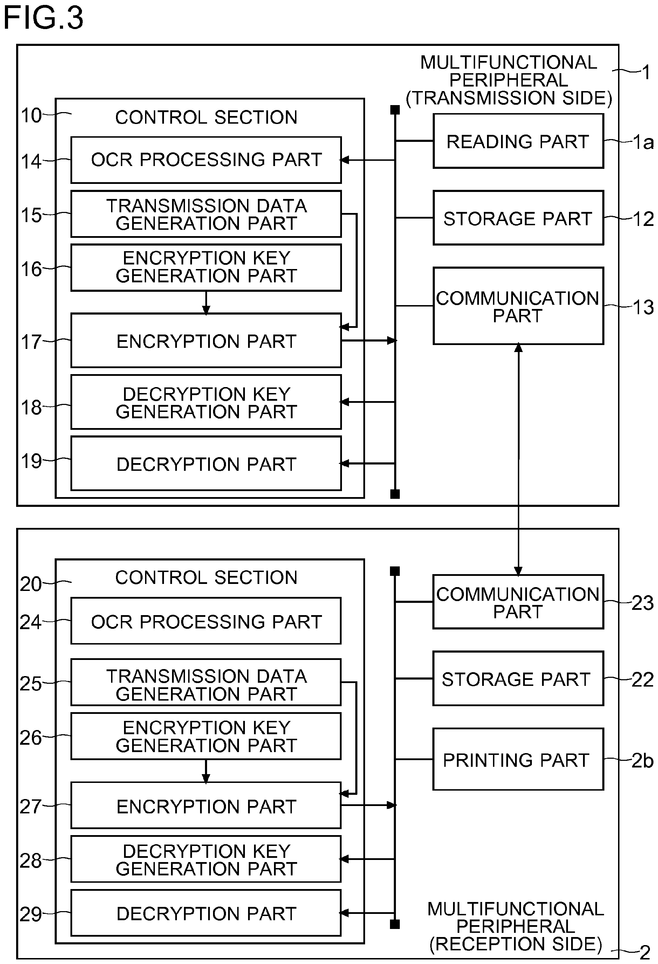

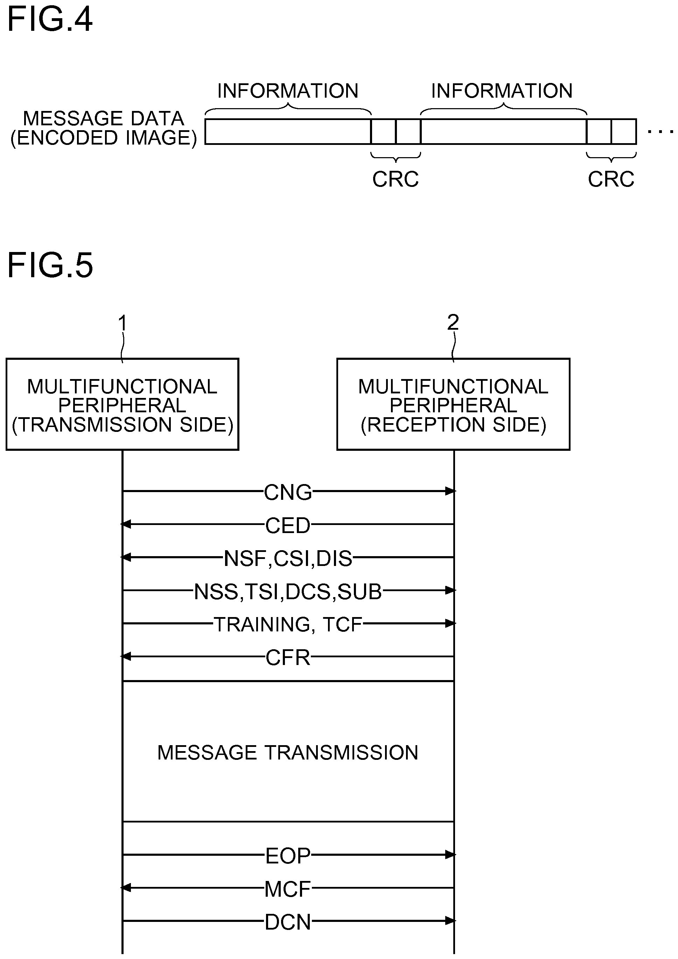

Next, facsimile communication-related parts of the transmission-side multifunctional peripheral 1 and the reception-side multifunctional peripheral 2 will be described with reference to FIGS. 3 and 4.

The control section 10 (control board) of the multifunctional peripheral 1 includes an OCR processing part 14, a transmission data generation part 15, an encryption key generation part 16, and an encryption part 17. The control section 10, which is operable also as a reception-side facsimile device in this disclosure, includes a decryption key generation part 18 and a decryption part 19.

The control section 20 (control board) of the multifunctional peripheral 2 includes a decryption key generation part 28 and a decryption part 29. The multifunctional peripheral 2, which is operable also as a transmission-side facsimile device in this disclosure, includes an OCR processing part 24, a transmission data generation part 25, an encryption key generation part 26, and an encryption part 27. These OCR processing parts 14, 24, transmission data generation parts 15, 25, encryption key generation parts 16, 26, encryption parts 17, 27, decryption key generation parts 18, 28, and decryption parts 19, 29 may be either provided as hardware or circuits or implemented by software in combination of the CPU 10a, the image processing part 10b and programs or combination of the CPU 20a, the image processing part 20b and programs.

The OCR processing part 14 performs OCR processing on image data acquired through reading by the reading part 1a, image data acquired through reception by the communication part 13 from the computer 200, or image data stored in the storage part 12 to extract text (characters and symbols) contained in the image data. The OCR processing part 24 performs OCR processing on image data acquired through reading by the reading part 2a, image data acquired through reception by the communication part 23 from the computer 300, or image data stored in the storage part 22 to extract text (characters and symbols) contained in the image data.

The transmission data generation parts 15, 25 perform coding (e.g., MH coding) of image data acquired by reading, image data acquired by reception, or image data stored in conformity to a facsimile-standard compression method. The transmission data generation parts 15, 25 generate message data in a predetermined format. FIG. 4 shows an example of the facsimile message data generated by the transmission data generation parts 15, 25. As shown in FIG. 4, the transmission data generation parts 15, 25 generate message data in an HDLC frame structure. The transmission data generation parts 15, 25 write image data (coded data), which are to be transmitted, into information sections out of the frame. The transmission data generation parts 15, 25 add a CRC code (a type of error detecting code) at the tail end of each one information section.

The encryption key generation parts 16, 26 generate encryption keys to be used in performing facsimile communications with use of cryptography. Details of the generation of encryption keys will be described later. The encryption parts 17, 27 perform encryption of generated message data with use of a common key 4 or encryption keys generated by the encryption key generation parts 16, 26 to generate encrypted data. The transmission-side communication part 13 transmits encrypted data toward the reception-side communication part 23. As a result, outward leaks and falsification of image data, the confidentiality of which should be retained, are prevented.

The decryption key generation part 18, 28 generates a decryption key to be used for decryption of encrypted data received during cryptographic communication. Details of the generation of the decryption key will be described later. The decryption part 19, 29 performs decryption of encrypted data with use of the common key 4 or a decryption key generated by the decryption key generation part 18, 28 to fulfill decryption of encrypted data. The multifunctional peripherals 1, 2 perform printing based on decrypted message data.

### (Basic flow of facsimile communication)

Next, basic flow of facsimile communications in the multifunctional peripherals 1, 2 according to this embodiment will be described with reference to FIG. 5. The following description will be given on an example in which the multifunctional peripheral 1 is a transmission-side (calling-station) facsimile device according to this disclosure while the multifunctional peripheral 2 is a reception-side (called-station) facsimile device.

As a facsimile-transmission start command is inputted to the operation panel 11, the transmission-side control section 10 instructs the communication part 13 to set up a connection to the network, and further instructs the communication part 13 to have a call to the reception-side facsimile device (multifunctional peripheral 2). The control section 10 instructs the communication part 13 to transmit a CNG signal (identification signal for informing that this is a facsimile device) toward the communication part 23 of the multifunctional peripheral 2. Upon reception of this signal, the reception-side control section 20 instructs the communication part 23 to transmit a CED signal (response signal for confirming that both are facsimile communications) toward the communication part 13 of the multifunctional peripheral 1. Subsequently, the reception-side control section 20 instructs the communication part 23 to transmit an NSF signal (signal for informing about a function outside the scope of ITU-T recommendations), a CSI signal (a reception-side terminal identification signal like a telephone number), and a DIS signal (signal for informing about a function the reception side has) toward the communication part 13 of the multifunctional peripheral 1.

Next, the transmission-side control section 10 instructs the communication part 23 to transmit an NSS signal (setting signal for a function outside the scope of ITU-T recommendations), a TSI signal (transmission-side terminal confirmation signal like a telephone number), a DCS signal (signal for commanding a transmission condition in response to the DIS signal), and a SUB signal (signal for communications with other facsimile devices using F code) toward the communication part 23 of the multifunctional peripheral 2. In addition, it is informed from the reception to the transmission side by NSS signal whether or not reception using the function settable by the NSS signal is possible (receivability of the multifunctional peripheral 2). Subsequently, the transmission-side control section 10 instructs the communication part 13 to transmit, toward the communication part 23 of the multifunctional peripheral 2, a training as to whether or not communication at a speed the DCS signal has transmitted is enabled. In addition, the transmission-side control section 10 continues a training of searching for conditions that allow error-free transmission and reception to be achieved at lowered communication speeds until a CFR signal (signal approving a message-transmission start subsequent to the procedure preceding the message) is returned from the reception-side communication part 23.

Upon reception of the CFR signal, the transmission-side control section 10 transmits message data toward the communication part 23 of the multifunctional peripheral 2. When all the pages have completely been transmitted, the transmission-side control section 10 instructs the communication part 13 to transmit an EOP signal (signal indicating an end of pages) toward the communication part 23 of the multifunctional peripheral 2. In contrast, the reception-side control section 20 instructs the communication part 23 to transmit an MCF signal (signal for informing about an normal reception) toward the communication part 13 of the multifunctional peripheral 1. Finally, the transmission-side control section 10 instructs the communication part 13 to transmit a DCN signal (signal for instructing line disconnection) toward the communication part 23 of the multifunctional peripheral 2 (end of communication).

### (Transmission-side processing flow in cryptographic communication)

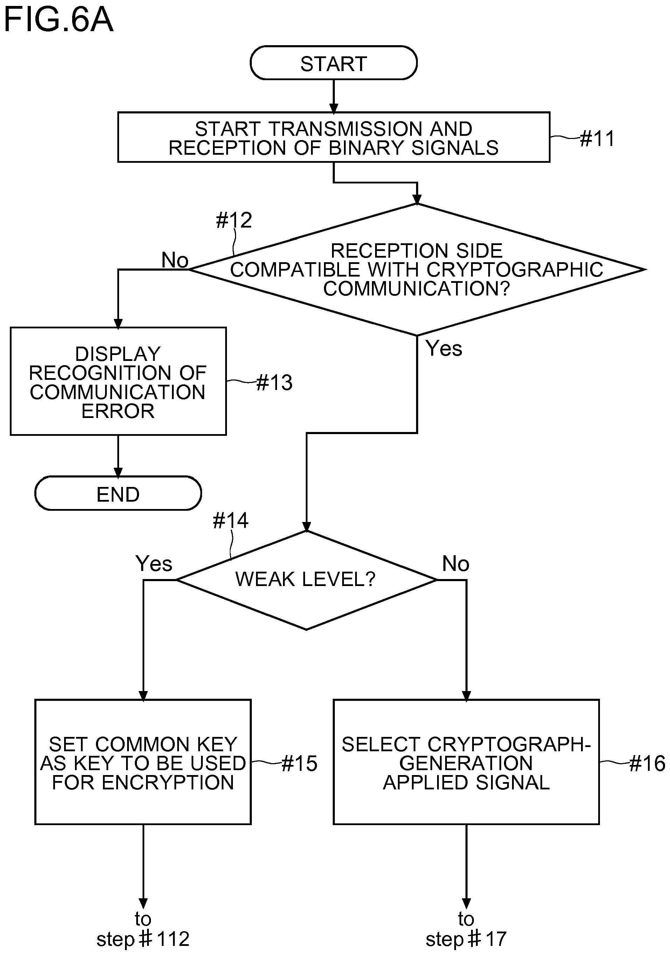

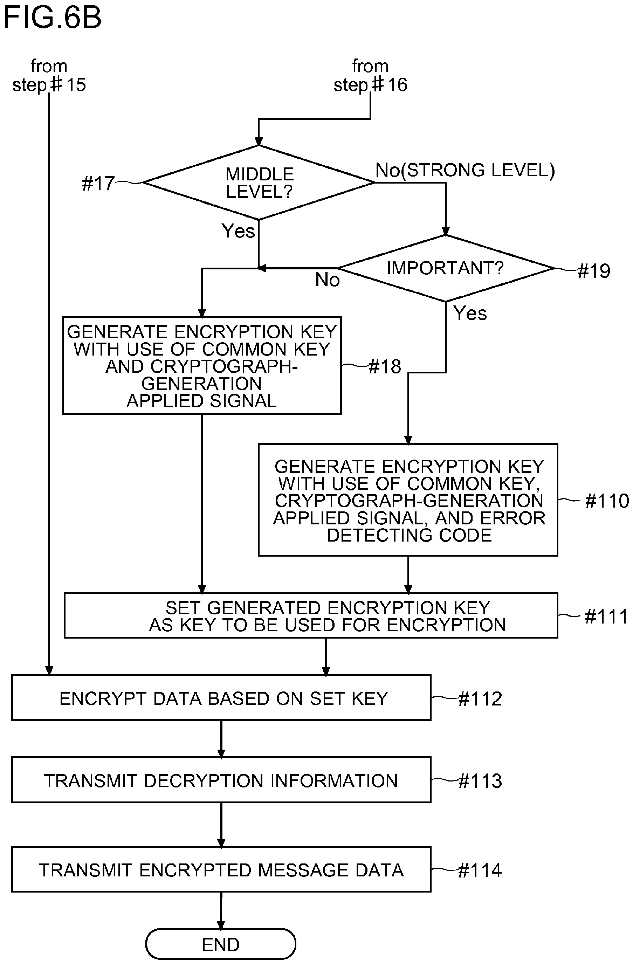

Next, an example of the transmission-side processing flow in cryptographic communication with the multifunctional peripheral 1 (facsimile communication system 100) according to this embodiment will be described with reference to FIGS. 6A, 6B, 7 and 8. It is noted that FIGS. 6A and 6A are parts of a sequential processing flow divided for convenience' sake.

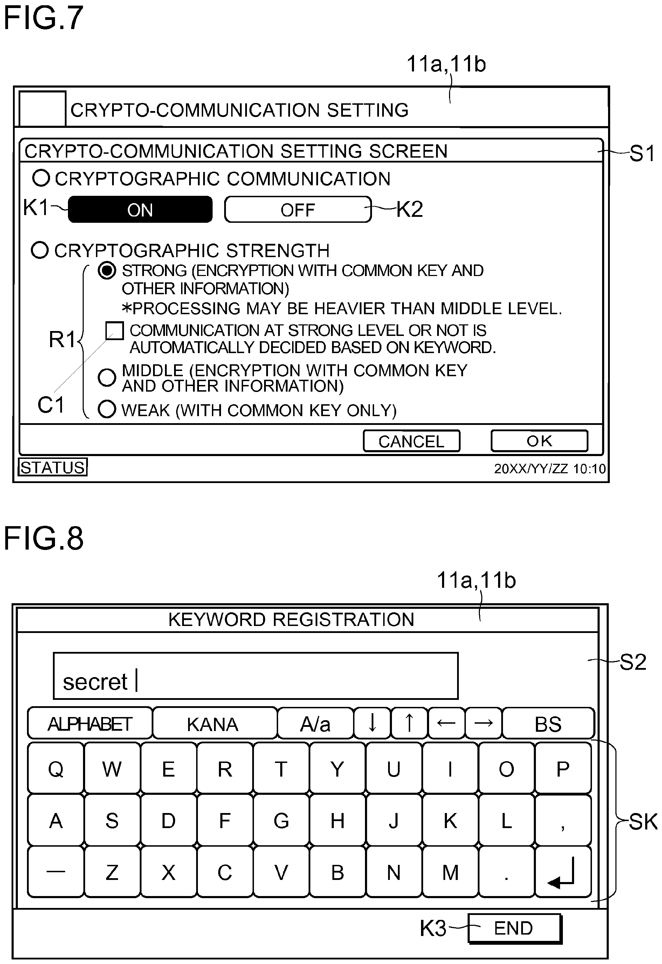

First, the transmission-side multifunctional peripheral 1 is enabled to set as to whether or not image data is encrypted and transmitted via facsimile (whether or not cryptographic communication is executed). An example of a setting screen therefor is shown in FIG. 7. FIG. 7 is a crypto-communication setting screen S1. When the operation panel 11 (touch panel 11b, hard keys 11c) is subjected to a specified operation, the control section 10 displays the crypto-communication setting screen S1 on the display panel.

An ON key K1 an OFF key K2 are disposed on the crypto-communication setting screen S1. The control section 10 recognizes a touch (operation) with the display position of the ON key K1 or the OFF key K2 based on an output of the touch panel. When the ON key K1 is operated, the control section 10 recognizes that a setting for performing cryptographic communication has been made. Also when the OFF key K2 is operated, the control section 10 recognizes that a setting for performing no cryptographic communication has been made.

The crypto-communication setting screen S1 allows the setting of a level of cryptographic strength (security) in the cryptographic communication. As the level goes higher, arithmetic operations and processes involved in encryption processing or decryption processing increase more and more, whereas it is harder to decrypt the cryptograph. In the example shown in FIG. 7, one level can be selected from among 'STRONG,' 'MIDDLE' (corresponding to a predetermined middle level) and 'WEAK' by touching any one display position in three radio buttons R1. The control section 10 recognizes a radio button R1 checked based on an output of the touch panel, thus recognizing that a level corresponding to the checked radio button R1 has been set.

The 'START' in FIG. 6A is at a time point when a facsimile-transmission execution start is instructed on the operation panel 11 of the transmission-side multifunctional peripheral 1 under a condition that execution of cryptographic communication has been set (condition that the ON key K1 has been operated). In addition, when a facsimile-transmission execution start is instructed on the operation panel 11 under another condition that non-execution of cryptographic communication has been set (condition that the OFF key K2 has been operated), the transmission-side control section 10 instructs the communication part 13 to transmit non-encrypted message data toward the reception-side communication part 23.

Upon the start of facsimile communication, the transmission-side communication part 13 starts transmission and reception of various binary signals with the reception-side communication part 23 before starting message transmission as described above (step #11). Before message transmission, the communication part 13 of the transmission-side multifunctional peripheral 1 receives such binary signals as CED signal, NSF signal, CIS signal, DIS signal and CFR signal. The communication part 13 also transmits such binary signals as NSS signal, TSI signal, DCS signal and TCF signal.

Based on the received NSF signal and DIS signal, the control section 10 checks whether or not the reception-side facsimile device is compatible with cryptographic communication (has the function of decrypting encrypted data to be transmitted by the multifunctional peripheral 1) (step #12).

When the reception-side facsimile device has no function equivalent to that of the multifunctional peripheral 2 so as to be incompatible with the cryptographic communication of this disclosure (No at step #12), the control section 10 recognizes occurrence of a communication error of reception-side incompatibility, displaying its message on the display panel (step #13) and terminating the flow (end). Under the condition that the reception-side facsimile device is compatible with the cryptographic communication of this disclosure as in the multifunctional peripheral 2 as so as to be capable of decrypting at any level of strong, middle and weak levels, step #12 results in a Yes. When the reception-side facsimile device is compatible with cryptographic communication (Yes at step #12), the control section 10 checks whether or not the crypto-communication level is set to 'WEAK' (set to a level lower than the middle level) (step #14).

With the 'WEAK' level set on the operation panel 11 (Yes at step #14), the control section 10 (encryption key generation part 16) sets the predetermined common key 4 as the key to be used for encryption (step #15, encryption using neither later-described cryptograph-generation applied signals nor error detecting codes). The common key 4 is preparatorily determined. The storage part 12 of the transmission-side multifunctional peripheral 1 and the storage part 22 of the reception-side multifunctional peripheral 2 each have stored the common key 4 (see FIG. 2).

In this connection, in the facsimile communication system 100, when the crypto-communication level is 'MIDDLE' or higher, a signal value of the cryptograph-generation applied signal is used for generation of the encryption key. When the 'WEAK' level is not set on the operation panel 11 (No at step #14), the control section 10 (encryption key generation part 16) selects a cryptograph-generation applied signal(s) to be used for the generation of an encryption key from among plural kinds of binary signals that are interchanged between transmission-side and reception-side devices before start of message transmission (step #16).

The cryptograph-generation applied signal is any one or plurality of the plural signals that are interchanged between transmission-side and reception-side devices before start of message transmission. It is preparatorily determined which one or ones are assigned as candidates out of plural kinds of signals. The multifunctional peripheral 1 sets any one or plurality of received NSF signal, CIS signal and DIS signal as a cryptograph-generation applied signal(s). These signals differ in signal value among individual communication counterparts. Therefore, the encryption key to be generated can be made different on a facsimile-transmission basis, so that the cryptographic strength can be enhanced.

Then, when an encryption key is generated by using a signal value of the cryptograph-generation applied signal, the control section 10 (encryption key generation part 16) randomly selects one or plural signals as a cryptograph-generation applied signal(s) from among the candidates (signals) applied as cryptograph-generation applied signals. The encryption key generation part 16 may select only one kind of signal or may select two kinds of signals or may select all the kinds of signals. The kind and number of signals to be applied as the cryptograph-generation applied signals vary among individual facsimile communications. Therefore, the encryption key to be used can be diversified so that even harder-to-decrypt cryptograph can be provided. In addition, the control section 10 (encryption key generation part 16) may select a predetermined kind(s) of signal as the cryptograph-generation applied signals, not randomly but definitely.

After step #16, the transmission-side control section 10 checks whether or not the crypto-communication level is set to 'MIDDLE' (set to the predetermined middle level) (step #17). With the 'MIDDLE' level set on the operation panel 11 (Yes at step #17), the control section 10 instructs the encryption key generation part to generate an encryption key with use of the common key 4 and the signal value (binary data) of the cryptograph-generation applied signal (step #18).

With use of the common key 4 and the signal value of the selected cryptograph-generation applied signal, the encryption key generation part performs a predetermined first arithmetic operation to generate an encryption key. Contents of the first arithmetic operation can be determined as required. The encryption key may be generated simply by summing up the common key 4 and the signal value of the cryptograph-generation applied signal or by combining a plurality of arithmetic operations such as addition, subtraction, multiplication and division. Otherwise, the encryption key may be generated by performing logical operations such as AND and OR operations.

Meanwhile, with the 'STRONG' level set on the operation panel 11 (when a level higher than the predetermined middle level is set, No at step #17), the control section 10 decides whether or not image data to be transmitted is important (step #19). The control section 10 decides that the image data is important when a preregistered keyword is contained in the image data, and decides as not important when no keyword is contained.

In making the decision at step #19, the OCR processing part 14 performs OCR processing on image data to be transmitted, recognizing characters and symbols contained in the image data. The control section 10 decides whether or not a keyword stored in the storage part 12 is contained in character strings or symbol strings recognized by the OCR processing part 14. For example, character strings generally attached to secrecy-obliged documents, such as "Confidential" and "Internal use only," can be registered as keywords in the storage part 12.

In this case, the multifunctional peripheral 1 allows the user to register keywords additionally. When a specified operation is executed by the touch panel or hard keys of the operation panel, the control section 10 displays a keyword registration screen S2 shown in FIG. 8 on the display panel. The keyword registration screen S2 includes a software keyboard SK. Characters of alphabet, Kanji (Chinese character), Kana (Japanese cursive character), numeral, and symbol can be inputted by operating the software keyboard SK. FIG. 8 shows an example in which a character string 'secret' is being registered as a keyword. Upon completion of input of a keyword to be registered, the user operates an end key K3. Thus, the operation panel 11 (touch panel 11b, hard keys 11c) accepts input for setting a keyword. The storage part 12 stores the newly set keyword.

Upon decision as important (Yes at step #19), the control section 10 instructs the encryption key generation part 16 to generate an encryption key with use of the common key 4, the signal value (binary data) of the cryptograph-generation applied signal, and the value of the error detecting code within the message data (step #110).

In addition, with the 'STRONG' level set, it is also possible that without deciding whether or not the image data is important (any keyword is contained), the multifunctional peripheral 1 always instructs the encryption key generation part 16 to generate an encryption key with use of the common key 4, the signal value of the cryptograph-generation applied signal, and the value of the error detecting code. This setting can be fulfilled in the crypto-communication setting screen S1 (see FIG. 7). Inputting check-on into a check box of the crypto-communication setting screen S1 causes a decision at step #19 to be performed. Checking off the check box C1 of the crypto-communication setting screen S1 causes the step #19 to be skipped. Then, with the 'STRONG' level set, the processing flow necessarily moves to step #110.

With use of the common key 4, the signal value of the cryptograph-generation applied signal, and the value of the error detecting code, the encryption key generation part 16 performs a predetermined second arithmetic operation to generate an encryption key. Contents of the second arithmetic operation can also be determined as required. The encryption key may be generated simply by summing up the common key 4, the signal value of the cryptograph-generation applied signal and the value of the error detecting code, or by combining a plurality of arithmetic operations such as addition, subtraction, multiplication and division. Otherwise, the encryption key may be generated by combining logical operations such as AND and OR operations.

An error detecting code of which position out of the message data is used can be determined as required. An error detecting code in the message data starting with the head and corresponding to the same bit number as the common key 4 may be extracted, or otherwise an error detecting code may be extracted randomly. However, the encryption key generation part 16 (control section 10) stores the value of the extracted error detecting code in the storage part 12.

Meanwhile, when the image data is decided as not important (No at step #19), the flow moves to step #18. That is, even with the crypto-communication level set at 'STRONG,' transmission of images containing no keyword causes the crypto-communication level to be automatically lowered.

Thus, with the crypto-communication level set at 'STRONG' and with character strings such as certain company names registered as keywords, the strength of cryptographic communication with counterparts demanding secrecy can be maintained at a high status. Also, even with the crypto-communication level set at 'STRONG,' in a case of a document (image data) containing no keyword, it is possible that the crypto-communication level is automatically lowered so as to reduce the arithmetic operations or processing involved in cryptographic communication.

After the step #18 and the step #110, the control section 10 (encryption key generation part 16) sets the generated encryption key to a key to be used for encryption (step #111). As a next step subsequent to the step #15 and step #111, the encryption part 17 performs encryption of message data (coded image data) based on the set key (step #112).

With the crypto-communication level set at 'WEAK,' the encryption part 17 performs encryption of message data with the common key 4. With the crypto-communication level set at 'MIDDLE' or 'STRONG,' the encryption part 17 performs encryption by using a key generated by the encryption key generation part. Also, the control section 10 (encryption part 17) performs encryption of message data by using an algorithm (system) that can be decrypted by the reception-side multifunctional peripheral 2, by which encrypted data is generated. The encryption part 17 performs encryption of message data by using an algorithm predetermined for use by the encryption part 17 or an algorithm of which the usability (decryptability) for the reception-side facsimile device (multifunctional peripheral 2) has been notified by an NSF and a DIS signal.

The control section 10 instructs the communication part 13 to transmit decryption information toward the communication part 23 of the multifunctional peripheral 2 (step #113). The reception-side multifunctional peripheral 2 needs to generate a decryption key for decryption of encrypted data. The transmission-side control section 10 instructs the communication part 13 to transmit, as the decryption information, information necessary for generation of a decryption key. The control section 10 instructs the communication part 13 to transmit an NSS signal containing decryption information toward the reception-side communication part 23. It is noted that the decryption information may include information indicative of an applied encryption algorithm.

When the encryption of message data is performed with the common key 4 only (when the crypto-communication level is set at 'WEAK'), the transmission-side control section 10 instructs the communication part 13 to transmit, toward the reception-side facsimile device (reception-side communication part 23), decryption information including a notification that the encryption has been done with the common key 4 only and a notification that the crypto-communication level is 'WEAK.'

When the encryption of message data is done by an encryption key generated by a combination of the common key 4 and the cryptograph-generation applied signal (when the crypto-communication level is 'MIDDLE' or is 'STRONG' yet with no keyword), the control section 10 instructs the communication part 13 to transmit, toward the reception-side communication part 23, decryption information including information indicative of the kind of the cryptograph-generation applied signal, a notification that encryption has been done by a combination of the common key 4 and the cryptograph-generation applied signal, and information indicative of the content of the first arithmetic operation.

When the encryption of message data is done by an encryption key generated by a combination of the common key 4, the cryptograph-generation applied signal and the error detecting code (when encryption is done at the 'STRONG' level of cryptographic communication), the transmission-side control section 10 instructs the communication part 13 to transmit, toward the reception-side facsimile device (reception-side communication part 23), decryption information including information indicative of the kind of the cryptograph-generation applied signal, information indicative of the value of the error detecting code used for generation of the encryption key, a notification that encryption has been done by a combination of the common key 4, the cryptograph-generation applied signal and the error detecting code, and information indicative of the content of the second arithmetic operation.

The control section 10 instructs the communication part 13 to transmit encrypted data toward the reception-side communication part 23 (step #114). Then, after completion of the transmission of message data, specified signals are interchanged, where the facsimile communication is terminated and this flow is also terminated (end).

### (Reception-side processing flow in cryptographic communication)

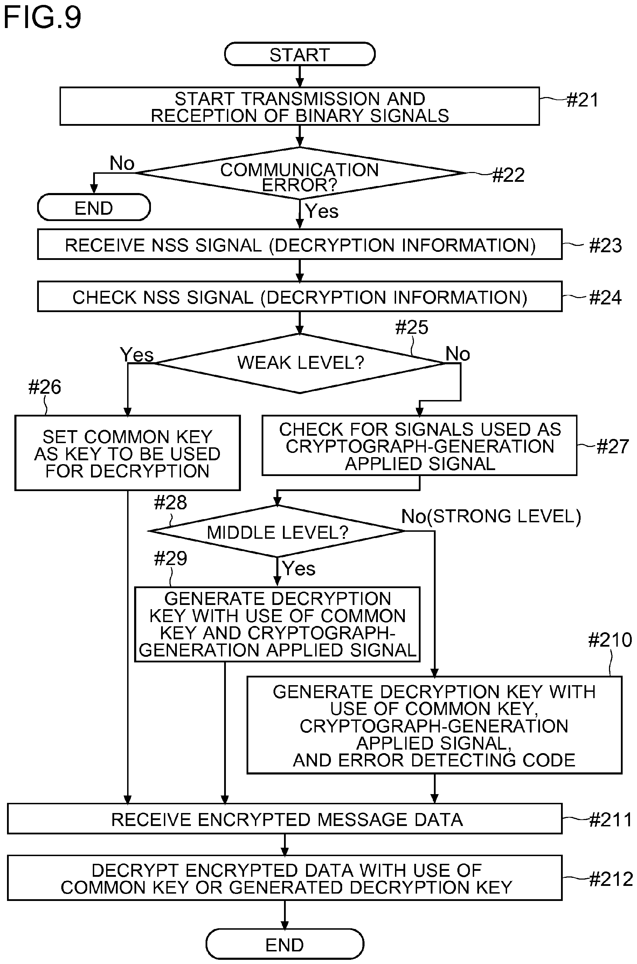

Next, an example of the reception-side processing flow in cryptographic communication with the multifunctional peripheral 2 (facsimile communication system 100) according to this embodiment will be described with reference to FIG. 9.

The 'START' in FIG. 9 is at a time point when a facsimile-transmission execution start is instructed on the operation panel 11 of the transmission-side multifunctional peripheral 1 under a condition that execution of cryptographic communication has been set (condition that the ON key K1 has been operated). In other words, the start is at a time point when facsimile communication by cryptograph with the multifunctional peripheral 1 to an address of the multifunctional peripheral 2 is started.

Upon the start of facsimile communication, the transmission-side communication part 13 starts transmission and reception of various binary signals with the reception-side communication part 23 as described above (step #21). Before message reception, the communication part 23 of the multifunctional peripheral 2 transmits such binary signals as CED signal, NSF signal, CIS signal, DIS signal and CFR signal before message transmission. The communication part 23 also receives such binary signals as NSS signal, TSI signal, DCS signal and TCF signal.

The reception-side control section 20 checks whether or not a communication error due to device's own incompatibility with a cryptographic communication system demanded by the transmission-side facsimile device (multifunctional peripheral 1) has occurred (step #22). Based on the received NSF signal and DIS signal, the transmission-side multifunctional peripheral 1 (control section 10) decides whether or not the reception-side facsimile device is compatible with the demanded cryptographic communication system. When the control section 10 decides that the reception-side facsimile device is incompatible with the cryptographic communication, the communication part 13 of the multifunctional peripheral 1 notifies the reception-side facsimile device of the communication error. Upon receiving this notification, the reception-side facsimile device recognizes occurrence of a communication error. In this disclosure, since the multifunctional peripheral 2 serves as the reception-side facsimile device, which is compatible with the cryptographic communication by the multifunctional peripheral 1, step #12 results in Yes.

Alternatively, based on the received NSS signal and DCS signal, the reception-side facsimile device may decide that the device itself is incompatible with the cryptographic communication system demanded by the transmission-side facsimile device (multifunctional peripheral 1) as well as that a communication error has occurred on the transmission side.

When a communication error has occurred (No at step #22), this flow is terminated (end). When compatible with the cryptographic communication system demanded by the transmission-side multifunctional peripheral 1 (Yes at step #22), the reception-side communication part 23 receives the NSS signal (decryption information) from the transmission-side communication part 13 (step #23). Then, the reception-side control section 20 confirms the decryption information contained in the NSS signal (step #24).

Based on the decryption information, the reception-side control section 20 checks whether or not the crypto-communication level is set to 'WEAK' (encryption is done with the common key 4 only) (step #25). Alternatively, when no data indicative of the cryptograph-generation applied signal are contained in the received decryption information, the control section 20 may decide that the encryption has been done with the common key 4 only.

When the encryption has been done with the common key 4 only (Yes at step #25), the control section 20 (decryption key generation part 28) sets the common key 4 stored in the storage part 22 as a key for use in decryption (step #26). Meanwhile, when the crypto-communication level is a level other than 'WEAK' (No at step #25), the reception-side control section 20, based on the decryption information, checks which signal has been used as the cryptograph-generation applied signal (step #27). In addition, in the facsimile communication system 100, a signal derived from the reception side is used as the cryptograph-generation applied signal. For this reason, the control section 20 instructs the storage part 22 to store signal values of individual signals transmitted to the multifunctional peripheral 1, thus making it possible to look up to those signal values as required.

Based on the decryption information, the reception-side control section 20 checks whether or not the crypto-communication level is set to 'MIDDLE' (step #28). When data indicative of the cryptograph-generation applied signal is contained in the received decryption information but no value of error detecting code is contained, the control section 20 may decide that encryption has been done by a key in a combination of the common key 4 and the cryptograph-generation applied signal.

When the encryption has been done by a key in combination of the common key 4 and the cryptograph-generation applied signal (Yes at step #28), the decryption key generation part 28 generates a decryption key by performing arithmetic operations with use of the common key 4 and the cryptograph-generation applied signal (step #29). In the facsimile communication system 100, an algorithm which allows decryption to be achieved by preparing a key identical to the encryption key is applicable. For example, the decryption key generation part 28 generates a decryption key by performing the above-described first arithmetic operation with use of the common key 4 and the signal value of the cryptograph-generation applied signal.

With the crypto-communication level at 'STRONG' (No at step #28), the decryption key generation part 28 generates a decryption key by performing predetermined arithmetic operations with use of the common key 4, the signal value of a signal used as the cryptograph-generation applied signal, and the value of an error detecting code indicative of decryption information (step #210). In the facsimile communication system 100, an algorithm which allows decryption to be achieved by preparing a key identical to the encryption key is applicable. For example, the decryption key generation part 28 generates a decryption key by performing the above-described second arithmetic operation with use of the common key 4, the signal value of the cryptograph-generation applied signal, and the value of an error detecting code contained in the decryption information.

After the steps #26, #29 and #210 (or before these steps), the reception-side communication part 23 receives encrypted data (encrypted message data) (step #211). The received encrypted data may be once stored in the storage part 22. The decryption part 29 performs decryption of the encrypted data with use of the common key 4 or the generated decryption key (step #212). Then, this flow is terminated (end). The control section 20 instructs the printing part 2b to perform printing based on the decrypted message data (image data). Otherwise, the control section 20 makes the decrypted message data (image data) stored in a facsimile-received data storage area within the storage part 22, allowing the printing part 2b to print data upon a printing instruction.

As described above, the transmission-side facsimile device (multifunctional peripheral 1) according to this embodiment includes: the operation part 1 (operation panel 11, touch panel 11b, hard keys 11c) for accepting a setting relating to cryptographic communication; the storage part 12 for storing therein the same common key 4 as in the reception-side facsimile device (multifunctional peripheral 2); the transmission data generation part 15 for subjecting image data to encoding process for facsimile communication to generate message data; the encryption key generation part 16 for selecting, as the cryptograph-generation applied signal, one or plural kinds of signals from among signals transmitted to and received from the reception-side facsimile device and moreover performing the first arithmetic operation with use of the common key 4 and the signal value of the cryptograph-generation applied signal to generate an encryption key; the encryption part 17 for performing encryption of message data by using the encryption key generated by the encryption key generation part 16 to generate encrypted data; and the communication part 13 for performing transmission and reception of signals with the reception-side facsimile device before start of message transmission and moreover transmitting encrypted data and decryption information including information indicative of the kind(s) of the cryptograph-generation applied signal to the reception-side facsimile device.

As a result of this, since values of interchanged signals differ among individual reception-side facsimile devices (multifunctional peripherals 2), encryption with a different encryption key can be performed before transmission each time data transmission is performed. In other words, the value of the encryption key used is not fixed. Accordingly, even though the common key 4 is known, the cryptograph cannot be decoded with the common key 4 only so that contents of transmitted image data can be kept unknown, making it possible to enhance the confidentiality in facsimile communications. Further, the encryption key may also be generated by simple arithmetic operations using a combination of the common key 4 and the signal value of the cryptograph-generation applied signal. In this case, arithmetic operations involved in encryption and decryption can be reduced, so that the time required for processing can be saved. Also, since decryption information is transmitted to the reception-side facsimile device, there occurs no inconsistency between keys, enabling the reception-side facsimile device to correctly achieve the decryption of encrypted data.

The transmission data generation part 15 generates message data containing the error detecting code. Given a setting in the operation part 1 that cryptographic communication is executed at a predetermined middle level, the encryption key generation part 16 generates an encryption key by performing the first arithmetic operation with use of the common key 4 and the signal value of the cryptograph-generation applied signal. The communication part 13 transmits decryption information including information indicative of the kind of the cryptograph-generation applied signal to the reception-side facsimile device (multifunctional peripheral 2). Meanwhile, given a setting in the operation part 1 that cryptographic communication of a level higher than the predetermined middle level is executed, the encryption key generation part 16 generates an encryption key by performing the second arithmetic operation with use of the common key 4, the signal value of the cryptograph-generation applied signal and the value of the error detecting code in message data, thereby generating an encryption key. The communication part 13 transmits, to the reception-side facsimile device, decryption information including information indicative of the kind of the cryptograph-generation applied signal as well as information indicative of the value of the error detecting code used for the generation of the encryption key.

As a result of this, the encryption key can be generated by using the value of the error detecting code in addition to the common key 4 and the cryptograph-generation applied signal. Since the value of the error detecting code differs depending on the content of transmitted image data (image information), encryption with a different encryption key can be performed before transmission each time data transmission is performed. Accordingly, it can be made impossible to decrypt the cryptograph merely with the common key only, so that the confidentiality can be further enhanced. Further, a unique encryption key can be generated by simple arithmetic operations such as a combination of the common key 4, the signal value of the cryptograph-generation applied signal and the value of the error detecting code, so that the time required for processing can be saved. Also, since decryption information including the value of the error detecting code is transmitted to the reception-side facsimile device (multifunctional peripheral 2), there occurs no inconsistency between keys, enabling the reception-side facsimile device to correctly achieve the decryption of encrypted data.

The transmission-side facsimile device (multifunctional peripheral 1) includes: the OCR processing part 14 for subjecting image data to OCR processing to recognize characters and symbols contained in the image data; and the decision part (control section 10, CPU 10a) for deciding whether or not a keyword stored in the storage part 12 is included in the characters and symbols recognized by the OCR processing part 14. When the decision part decides that a keyword is contained in the image data, the encryption key generation part 16 generates an encryption key by performing the second arithmetic operation with use of the common key 4, the signal value of the cryptograph-generation applied signal and the value of the error detecting code in the message data. When the decision part decides that no keyword is contained in the image data, the encryption key generation part 16 generates an encryption key by performing the first arithmetic operation with use of the common key 4 and the signal value of the cryptograph-generation applied signal and without use of the error detecting code.

As a result of this, encryption using the value of the error detecting code can be executed only when image data is decided to be really high in confidentiality. Accordingly, computing throughput (computing steps) involved in the generation of an encryption key can be reduced by suppressing use of the error detecting code unless the image data is really high in confidentiality.

The operation part 1 accepts setting input of a new keyword. The storage part 12 adds a newly set keyword to keyword data 5. Thus, the user is allowed to add desired keywords.

For generation of an encryption key by using performing the first arithmetic operation with use of the signal value of the cryptograph-generation applied signal, the encryption key generation part 16 selects one or plural kinds of signals from among predetermined signals randomly as a cryptograph-generation applied signal(s). As a result, the encryption key is generated not by using the same kind of signals in all cases but by changing the kind of signals used for the cryptograph-generation applied signal depending on cases. Thus, cryptographic communication can be executed by using a different encryption key each time even for transmissions to the same facsimile device (multifunctional peripheral 1).

The encryption key generation part 16 uses one or plurality of NSF signal, CSI signal and DIS signal as the cryptograph-generation applied signal. As a result of this, the encryption key can be prepared based on signals before the start of transmission and reception of messages (image data, message data). Accordingly, the encryption key can be generated at a step before the start of transmission and reception of message data.

Given a setting in the operation part 1 that cryptographic communication of a level lower than the predetermined middle level is executed, the encryption part 17 generates encrypted data by performing encryption of message data with use of the common key 4 and without use of values of the cryptograph-generation applied signal and the error detecting code. The communication part 13 transmits, to the reception-side facsimile device (multifunctional peripheral 2), decryption information including a notification that encryption has been done with the common key 4. Thus, facsimile communication with encryption executed with the common key 4 only is also selectable. Computing throughput (computing steps) involved in encryption and decryption can be reduced by suppressing execution of arithmetic operations for preparation of an encryption key. Also, the cryptographic strength can be selected freely. Furthermore, since the way that encryption has been done with the common key 4 only is notified to the reception-side facsimile device, the reception-side facsimile device is enabled to correctly decrypt the message data (image data).

The reception-side facsimile device (multifunctional peripheral 2) includes: the communication part 23 for performing transmission and reception with the transmission-side facsimile device (multifunctional peripheral 1) to receive encrypted data encrypted by the transmission-side facsimile device as well as decryption information including information indicative of the kind of the cryptograph-generation applied signal, which is a signal or signals used for generation of the encryption key by the transmission-side facsimile device, out of the signals transmitted and received with the transmission-side facsimile device; the storage part 22 for storing the same common key 4 as that of the transmission-side facsimile device; the decryption key generation part 28 for generating a decryption key by performing a predetermined arithmetic operation with use of the common key 4 and the signal value of the cryptograph-generation applied signal indicated by the decryption information; and the decryption part 29 for decrypting the encrypted data by using the decryption key generated by the decryption key generation part 28. As a result of this, the reception-side facsimile device is enabled to correctly decrypt the encrypted data even though the transmission-side facsimile device has encrypted data by using the signal value of the cryptograph-generation applied signal.

When the communication part 23 of the facsimile device (multifunctional peripheral 2) receives, from the transmission-side facsimile device, decryption information including information indicative of the kind of the cryptograph-generation applied signal used for generation of the encryption key by the transmission-side facsimile device (multifunctional peripheral 1) and information indicative of the value of the error detecting code used by the transmission-side facsimile device, the decryption key generation part 28 generates a decryption key by performing the predetermined second arithmetic operation with use of the common key 4, the signal value of the cryptograph-generation applied signal indicated by the decryption information, and the value of the error detecting code indicated by the decryption information. As a result of this, the reception-side facsimile device is enabled to correctly decrypt the encrypted data even though the transmission-side facsimile device has encrypted the data by using the value of the error detecting code in addition to the signal value of the cryptograph-generation applied signal in order to enhance the cryptographic strength.

The facsimile communication system 100 includes the above-described multifunctional peripheral 1 as a transmission-side facsimile device, and the above-described multifunctional peripheral 2 as a reception-side facsimile device. Thus, there can be provided a facsimile communication system 100 which uses the common key 4 as well as the signal value of the cryptograph-generation applied signal (value of error detecting code depending on cases) indicated by the decryption information so that contents of cryptographic communications cannot be decrypted merely with the common key 4 only even though the transmission-side and reception-side common key 4 is leaked.

## Claims

1. A facsimile device comprising:
an operation part (11) for accepting a setting relating to cryptographic communication;
a storage part (12) for storing therein a same common key as in a reception-side facsimile device (2);
a transmission data generation part (15) for generating message data by subjecting image data to an encoding process for facsimile communication;
an encryption key generation part (16) for generating an encryption key by selecting, as a cryptograph-generation applied signal(s), one or plural kinds of signals from among signals received from the reception-side facsimile device (2) and notifying a number or function to the reception-side facsimile device (2) and moreover performing a first arithmetic operation with use of the common key and a signal value of the cryptograph-generation applied signal;
an encryption part (17) for generating encrypted data by performing encryption of the message data with use of the encryption key generated by the encryption key generation part (16); and
a communication part (13) for performing transmission and reception of signals with the reception-side facsimile device (2) before start of message transmission and moreover transmitting the encrypted data and decryption information including information indicative of a kind of the cryptograph-generation applied signal to the reception-side facsimile device (2), wherein
the operation part (11) displays a crypto-communication setting screen (S1) and accepts a setting of a level in cryptographic communication based on operation in the crypto-communication setting screen (S1),
the transmission data generation part (15) generates message data including an error detecting code,
given a setting in the operation part (11) that cryptographic communication is executed at a predetermined middle level,
the encryption key generation part (16) generates an encryption key by performing the first arithmetic operation with use of the common key and the signal value of the cryptograph-generation applied signal,
the communication part (13) transmits, to the reception-side facsimile device (2), the decryption information including information indicative of the kind of the cryptograph-generation applied signal,
given a setting in the operation part (11) that cryptographic communication of a level higher than the predetermined middle level is executed,
the encryption key generation part (16) generates an encryption key by performing a second arithmetic operation with use of the common key, the signal value of the cryptograph-generation applied signal and the value of the error detecting code within the message data, and
the communication part (13) transmits, to the reception-side facsimile device (2), the decryption information including information indicative of the kind of the cryptograph-generation applied signal and information indicative of the value of the error detecting code used for generation of the encryption key.

2. The facsimile device as claimed in claim 1, further comprising
given a setting in the operation part (11) that cryptographic communication of a level higher than the predetermined middle level is executed,
an OCR processing part (14) for subjecting image data to OCR processing to recognize characters and symbols contained in the image data; and
a decision part (10, 10a) for deciding whether or not a keyword stored in the storage part (12) is contained in character strings and symbol strings recognized by the OCR processing part (14), wherein
when the decision part (10, 10a) decides that the keyword is contained in the image data,
the encryption key generation part (16) generates an encryption key by performing the second arithmetic operation with use of the common key, a signal value of the cryptograph-generation applied signal and the value of the error detecting code within the message data,
when the decision part (10, 10a) decides that the keyword is not contained in the image data,
the encryption key generation part (16) generates an encryption key by performing the first arithmetic operation with use of the common key and the signal value of the cryptograph-generation applied signal and without use of the error detecting code.

3. The facsimile device as claimed in claim 2, wherein
given a setting that cryptographic communication of a level higher than the predetermined middle level is executed, the operation part (11) accepts a setting that the encryption key generation part (16) is made to always generate an encryption key with use of the common key, a signal value of the cryptograph-generation applied signal and a value of the error detecting code without deciding whether or not the keyword is contained.

4. The facsimile device as claimed in claim 2 or 3, wherein
the operation part (11) accepts input of newly setting the keyword, and
the storage part (12) stores therein the newly set keyword.

5. The facsimile device as claimed in any one of claims 1 to 4, wherein
the encryption key generation part (16) uses any one or plurality of NSF signal, CSI signal and DIS signal as the encryption key generation part.

6. The facsimile device as claimed in any one of claims 1 to 5, wherein
given a setting in the operation part (11) that cryptographic communication of a level lower than the predetermined middle level is executed,
the encryption part (17) performs encryption of the message data with use of the common key and without use of the cryptograph-generation applied signal and the value of the error detecting code to generate encrypted data, and
the communication part (13) transmits, to the reception-side facsimile device (2), the decryption information including a notification that encryption has been done with the common key.

7. A facsimile communication system including a facsimile device (1) as claimed in any one of claims 1 to 6, and a reception-side facsimile device (2),
**characterized in that** the reception-side facsimile device (2) includes:
a communication part (23) for performing transmission and reception with a transmission-side facsimile device (1) and receiving the encrypted data encrypted by the transmission-side facsimile device (1) as well as the decryption information;
a storage part (22) for storing therein a same common key as in the transmission-side facsimile device (1);
a decryption key generation part (28) for generating a decryption key by performing a predetermined arithmetic operation with use of the common key and a signal value of the cryptograph-generation applied signal indicated by the decryption information, and
a decryption part (29) for decrypting the encrypted data with use of the decryption key generated by the decryption key generation part (28).

8. The facsimile communication system as claimed in claim 7, wherein
when the communication part (23) of the reception-side facsimile device (2) receives, from the transmission-side facsimile device (1), the decryption information including information indicative of a kind of the cryptograph-generation applied signal used for generation of an encryption key by the transmission-side facsimile device (1) as well as information indicative of a value of the error detecting code used by the transmission-side facsimile device (1), and
the decryption key generation part (28) generates a decryption key by performing a predetermined arithmetic operation with use of the common key, a signal value of the cryptograph-generation applied signal indicated by the decryption information, and a value of the error detecting code indicated by the decryption information.

9. The facsimile communication system as claimed in claim 7, wherein
when no data indicative of a cryptograph-generation applied signal is contained in received decryption information, the decryption key generation part (28) sets the common key stored in the storage part (22) as the decryption key.

10. A facsimile device control method comprising the steps of:
accepting a setting relating to cryptographic communication;
storing a same common key as in a reception-side facsimile device (2);
generating message data by subjecting image data to an encoding process for facsimile communication;
generating an encryption key by selecting, as a cryptograph-generation applied signal(s), one or plural kinds of signals from among signals transmitted to and received from the reception-side facsimile device (2) and notifying a number or function to the reception-side facsimile device (2) and moreover performing a first arithmetic operation with use of the common key and a signal value of the cryptograph-generation applied signal;
generating encrypted data of the message data with use of the generated encryption key;
performing transmission and reception of signals with the reception-side facsimile device (2) before start of message transmission and moreover transmitting the encrypted data and decryption information including information indicative of a kind of the cryptograph-generation applied signal to the reception-side facsimile device (2);
displaying a crypto-communication setting screen (S1);
accepting a setting of a level in cryptographic communication based on operation in the crypto-communication setting screen (S1),
generating message data including an error detecting code,
given a setting that cryptographic communication is executed at a predetermined middle level,
generating an encryption key by performing the first arithmetic operation with use of the common key and the signal value of the cryptograph-generation applied signal, and
transmitting, to the reception-side facsimile device (2), the decryption information including information indicative of the kind of the cryptograph-generation applied signal, and
given a setting that cryptographic communication of a level higher than the predetermined middle level is executed,
generating an encryption key by performing a second arithmetic operation with use of the common key, the signal value of the cryptograph-generation applied signal and the value of the error detecting code within the message data, and
transmitting, to the reception-side facsimile device (2), the decryption information including information indicative of the kind of the cryptograph-generation applied signal and information indicative of the value of the error detecting code used for generation of the encryption key.

## Patentansprüche

1. Faksimilevorrichtung, umfassend:
ein Betriebsteil (11) zum Akzeptieren einer Einstellung in Bezug auf kryptographische Kommunikation;
ein Speicherteil (12) zum Speichern darin eines gleichen gemeinsamen Schlüssels wie in einer empfangsseitigen Faksimilevorrichtung (2);
ein Übertragungsdatenerzeugungsteil (15) zum Erzeugen von Nachrichtendaten durch Unterziehen von Bilddaten unter einen Kodierungsprozess für Faksimilekommunikation;
ein Verschlüsselungsschlüsselerzeugungsteil (16) zum Erzeugen eines Verschlüsselungsschlüssels durch Auswählen, als ein Kryptograph-Erzeugung angelegte(s) Signals/Signale, einer oder mehrerer Arten von Signalen aus Signalen, die von der empfangsseitigen Faksimilevorrichtung (2) empfangen wurden, und Benachrichtigen einer Zahl oder Funktion an die empfangsseitige Faksimilevorrichtung (2) und
des Weiteren Durchführen einer ersten arithmetischen Operation unter Verwendung des gemeinsamen Schlüssels und eines Signalwerts des Kryptograph-Erzeugung angelegten Signals;
ein Verschlüsselungsteil (17) zum Erzeugen verschlüsselter Daten durch Durchführen von Verschlüsselung der Nachrichtendaten unter Verwendung des Verschlüsselungsschlüssels, der von dem Verschlüsselungsschlüsselerzeugungsteil (16) erzeugt wurde; und
ein Kommunikationsteil (13) zum Durchführen von Senden und Empfang von Signalen mit der empfangsseitigen Faksimilevorrichtung (2) vor Start der Nachrichtübermittlung und des Weiteren Senden der verschlüsselten Daten und Entschlüsselungsinformationen, einschließlich Informationen, die für eine Art des Kryptograph-Erzeugung angelegten Signals indikativ sind, an die empfangsseitige Faksimilevorrichtung (2), wobei
das Betriebsteil (11) einen Kryptokommunikation-Einstellbildschirm (S1) anzeigt und eine Einstellung einer Ebene in kryptographischer Kommunikation basierend auf Operation in dem Kryptokommunikation-Einstellbildschirm (S1) akzeptiert,
das Übertragungsdatenerzeugungsteil (15) Nachrichtendaten erzeugt, einschließlich eines Fehlererkennungscodes,
eine Einstellung in dem Betriebsteil (11) gegeben, dass kryptographische Kommunikation an einer vorbestimmten mittleren Ebene ausgeführt wird,
das Verschlüsselungsschlüsselerzeugungsteil (16) einen Verschlüsselungsschlüssel durch Durchführen der ersten arithmetischen Operation unter Verwendung des gemeinsamen Schlüssels und des Signalwerts des Kryptograph-Erzeugung angelegten Signals erzeugt,
das Kommunikationsteil (13), an die empfangsseitige Faksimilevorrichtung (2), die Entschlüsselungsinformationen, einschließlich Informationen, die indikativ für die Art des Kryptograph-Erzeugung angelegten Signals sind, sendet,
eine Einstellung in dem Betriebsteil (11) gegeben, dass kryptographische Kommunikation einer höheren Ebene als die vorbestimmte mittlere Ebene ausgeführt wird,
das Verschlüsselungsschlüsselerzeugungsteil (16) einen Verschlüsselungsschlüssel durch Durchführen einer zweiten arithmetischen Operation unter Verwendung des gemeinsamen Schlüssels, des Signalwerts des Kryptograph-Erzeugung angelegten Signals und des Werts des Fehlererkennungscodes innerhalb der Nachrichtendaten erzeugt, und
das Kommunikationsteil (13), an die empfangsseitige Faksimilevorrichtung (2), die Entschlüsselungsinformationen, einschließlich Informationen, die indikativ für die Art des Kryptograph-Erzeugung angelegten Signals sind, und Informationen, die indikativ für den Wert des Fehlererkennungscodes sind, der für Erzeugung des Verschlüsselungsschlüssels verwendet wurde, sendet.

2. Faksimilevorrichtung nach Anspruch 1, ferner umfassend:
eine Einstellung in dem Betriebsteil (11) gegeben, dass kryptographische Kommunikation einer höheren Ebene als die vorbestimmte mittlere Ebene ausgeführt wird,
ein OCR-Verarbeitungsteil (14), um Bilddaten OCR-Verarbeitung zu unterziehen, um Zeichen und Symbole zu erkennen, die in den Bilddaten enthalten sind; und
ein Entscheidungsteil (10, 10a) zum Entscheiden, ob ein Schlüsselwort, das in dem Speicherteil (12) gespeichert ist, in Zeichenketten und Symbolketten, die von dem OCR-Verarbeitungsteil (14) erkannt werden, enthalten ist oder nicht, wobei,
wenn das Entscheidungsteil (10, 10a) entscheidet, dass das Schlüsselwort in den Bilddaten enthalten ist,
das Verschlüsselungsschlüsselerzeugungsteil (16) einen Verschlüsselungsschlüssel durch Durchführen der zweiten arithmetischen Operation unter Verwendung des gemeinsamen Schlüssels, eines Signalwerts des Kryptograph-Erzeugung angelegten Signals und des Werts des Fehlererkennungscodes innerhalb der Nachrichtendaten erzeugt,
wenn das Entscheidungsteil (10, 10a) entscheidet, dass das Schlüsselwort nicht in den Bilddaten enthalten ist,
das Verschlüsselungsschlüsselerzeugungsteil (16) einen Verschlüsselungsschlüssel durch Durchführen der ersten arithmetischen Operation unter Verwendung des gemeinsamen Schlüssels und des Signalwerts des Kryptograph-Erzeugung angelegten Signals und ohne Verwendung des Fehlererkennungscodes erzeugt.

3. Faksimilevorrichtung nach Anspruch 2, wobei,
eine Einstellung gegeben, dass kryptographische Kommunikation einer Ebene höher als die vorbestimmte mittlere Ebene ausgeführt wird, das Betriebsteil (11) eine Einstellung akzeptiert, dass das Verschlüsselungsschlüsselerzeugungsteil (16) hergestellt ist, immer einen Verschlüsselungsschlüssel unter Verwendung des gemeinsamen Schlüssels, eines Signalwerts des Kryptograph-Erzeugung angelegten Signals und eines Werts des Fehlererkennungscodes zu erzeugen, ohne zu entscheiden, ob das Schlüsselwort enthalten ist oder nicht.

4. Faksimilevorrichtung nach Anspruch 2 oder 3, wobei
das Betriebsteil (11) Eingabe der Neueinstellung des Schlüsselworts akzeptiert, und
das Speicherteil (12) darin das neu eingestellte Schlüsselwort speichert.

5. Faksimilevorrichtung nach einem der Ansprüche 1 bis 4, wobei
das Verschlüsselungsschlüsselerzeugungsteil (16) jedwedes eines oder eine Vielzahl von NSF-Signal, CSI-Signal und DIS-Signal als das Verschlüsselungsschlüsselerzeugungsteil verwendet.

6. Faksimilevorrichtung nach einem der Ansprüche 1 bis 5, wobei,
eine Einstellung in dem Betriebsteil (11) gegeben, dass kryptographische Kommunikation einer niedrigeren Ebene als die vorbestimmte mittlere Ebene ausgeführt wird,
das Verschlüsselungsteil (17) Verschlüsselung der Nachrichtendaten unter Verwendung des gemeinsamen Schlüssels durchführt und ohne Verwendung des Kryptograph-Erzeugung angelegten Signals und des Werts des Fehlererkennungscodes, um verschlüsselte Daten zu erzeugen, und
das Kommunikationsteil (13), an die empfangsseitige Faksimilevorrichtung (2), die Entschlüsselungsinformationen sendet, einschließlich einer Benachrichtigung, dass Verschlüsselung mit dem gemeinsamen Schlüssel durchgeführt wurde.

7. Faksimilekommunikationssystem, das eine Faksimilevorrichtung (1) nach einem der Ansprüche 1 bis 6 beinhaltet, und eine empfangsseitige Faksimilevorrichtung (2),
**dadurch gekennzeichnet, dass** die empfangsseitige Faksimilevorrichtung (2) beinhaltet:
ein Kommunikationsteil (23) zum Durchführen von Senden und Empfang mit einer sendeseitigen Faksimilevorrichtung (1) und Empfangen der verschlüsselten Daten, die von der sendeseitigen Faksimilevorrichtung (1) verschlüsselt wurden,
sowie der Entschlüsselungsinformationen;
ein Speicherteil (22) zum Speichern darin eines gleichen gemeinsamen Schlüssels wie in einer sendeseitigen Faksimilevorrichtung (1);
ein Entschlüsselungsschlüsselerzeugungsteil (28) zum Erzeugen eines Entschlüsselungsschlüssels durch Durchführen einer vorbestimmten arithmetischen Operation unter Verwendung des gemeinsamen Schlüssels und eines Signalwerts des Kryptograph-Erzeugung angelegten Signals, die von den Entschlüsselungsinformationen angegeben werden, und
ein Entschlüsselungsteil (29) zum Entschlüsseln der verschlüsselten Daten unter Verwendung des Entschlüsselungsschlüssels, der von dem Entschlüsselungsschlüsselerzeugungsteil (28) erzeugt wurde.

8. Faksimilekommunikationssystem nach Anspruch 7, wobei, wenn das Kommunikationsteil (23) der empfangsseitigen Faksimilevorrichtung (2), von der sendeseitigen Faksimilevorrichtung (1), die Entschlüsselungsinformationen empfängt, die Informationen beinhalten, die für eine Art des Kryptograph-Erzeugung angelegten Signals indikativ sind, das für Erzeugung eines Verschlüsselungsschlüssels durch die sendeseitige Faksimilevorrichtung (1) verwendet wurde, sowie Informationen, die indikativ für einen Wert des Fehlererkennungscodes sind, der von der sendeseitigen Faksimilevorrichtung (1) verwendet wurde, und
das Entschlüsselungsschlüsselerzeugungsteil (28) einen Entschlüsselungsschlüssel durch Durchführen einer vorbestimmten arithmetischen Operation unter Verwendung des gemeinsamen Schlüssels, eines Signalwerts des Kryptograph-Erzeugung angelegten Signals, das von den Entschlüsselungsinformationen angegeben wird, und eines Werts des Fehlererkennungscodes, der von den Entschlüsselungsinformationen angegeben wird, erzeugt.

9. Faksimilekommunikationssystem nach Anspruch 7, wobei, wenn keine Daten, die für ein Kryptograph-Erzeugung angelegtes Signal indikativ sind, in empfangenen Entschlüsselungsinformationen enthalten sind, das Entschlüsselungsschlüsselerzeugungsteil (28) den gemeinsamen Schlüssel, der in dem Speicherteil (22) gespeichert ist, als den Entschlüsselungsschlüssel festlegt.

10. Faksimilevorrichtungssteuerverfahren, die Schritte umfassend:
Akzeptieren einer Einstellung in Bezug auf kryptographische Kommunikation;
Speichern eines gleichen gemeinsamen Schlüssels wie in einer empfangsseitigen Faksimilevorrichtung (2);
Erzeugen von Nachrichtendaten durch Unterziehen von Bilddaten unter einen Kodierungsprozess für Faksimilekommunikation;
Erzeugen eines Verschlüsselungsschlüssels durch Auswählen, als ein Kryptograph-Erzeugung angelegte(s) Signals/Signale, einer oder mehrerer Arten von Signalen aus Signalen, die an die empfangsseitige Faksimilevorrichtung (2) gesendet und von dieser empfangen wurden, und Benachrichtigen einer Zahl oder Funktion an die empfangsseitige Faksimilevorrichtung (2) und des Weiteren Durchführen einer ersten arithmetischen Operation unter Verwendung des gemeinsamen Schlüssels und eines Signalwerts des Kryptograph-Erzeugung angelegten Signals;
Erzeugen verschlüsselter Daten der Nachrichtendaten unter Verwendung des erzeugten Verschlüsselungsschlüssels;
Durchführen von Senden und Empfang von Signalen mit der empfangsseitigen Faksimilevorrichtung (2) vor Start der Nachrichtübermittlung und des Weiteren Senden der verschlüsselten Daten und Entschlüsselungsinformationen, die Informationen beinhalten, die für eine Art des Kryptograph-Erzeugung angelegten Signals indikativ sind, an die empfangsseitige Faksimilevorrichtung (2);
Anzeigen eines Kryptokommunikations-Einstellbildschirms (S1);
Akzeptieren einer Einstellung einer Ebene in kryptographischer Kommunikation basierend auf Operation in dem Kryptokommunikations-Einstellbildschirm (S1),
Erzeugen von Nachrichtendaten, die einen Fehlererkennungscode beinhalten,
eine Einstellung gegeben, dass kryptographische Kommunikation an einer vorbestimmten mittleren Ebene ausgeführt wird,
Erzeugen eines Verschlüsselungsschlüssels durch Durchführen der ersten arithmetischen Operation unter Verwendung des gemeinsamen Schlüssels und des Signalwerts des Kryptograph-Erzeugung angelegten Signals, und
Senden, an die empfangsseitige Faksimilevorrichtung (2), der Entschlüsselungsinformationen, die Informationen beinhalten, die indikativ für die Art des Kryptograph-Erzeugung angelegten Signals sind, und
eine Einstellung gegeben, dass kryptographische Kommunikation einer höheren Ebene als die vorbestimmte mittlere Ebene ausgeführt wird,
Erzeugen eines Verschlüsselungsschlüssels durch Durchführen einer zweiten arithmetischen Operation unter Verwendung des gemeinsamen Schlüssels, des Signalwerts des Kryptograph-Erzeugung angelegten Signals und des Werts des Fehlererkennungscodes innerhalb der Nachrichtendaten, und
Senden, an die empfangsseitige Faksimilevorrichtung (2), der Entschlüsselungsinformationen, die Informationen beinhalten, die indikativ für die Art des Kryptograph-Erzeugung angelegten Signals sind, und Informationen, die indikativ für den Wert des Fehlererkennungscodes sind, der für Erzeugung des Verschlüsselungsschlüssels verwendet wurde.

## Revendications

1. Dispositif de télécopie comprenant :
une partie opérationnelle (11) pour accepter un paramétrage relatif à une communication cryptographique ;
une partie de stockage (12) pour stocker dans celle-ci une même clé commune que dans un dispositif de télécopie de côté réception (2) ;
une partie de génération de données de transmission (15) pour générer des données de message en soumettant des données d'image à un processus de codage pour communication par télécopie ;
une partie de génération de clé de chiffrement (16) pour générer une clé de chiffrement en sélectionnant, comme un/des signal/signaux appliqué(s) à une génération de cryptographe, un ou plusieurs types de signaux parmi des signaux reçus du dispositif de télécopie de côté réception (2) et en notifiant un nombre ou une fonction au dispositif de télécopie de côté réception (2) et de plus en effectuant une première opération arithmétique en faisant usage de la clé commune et d'une valeur de signal du signal appliqué à une génération de cryptographe ;
une partie de chiffrement (17) pour générer des données chiffrées en effectuant un chiffrement des données de message en faisant usage de la clé de chiffrement générée par la partie de génération de clé de chiffrement (16) ; et
une partie de communication (13) pour effectuer une transmission et une réception de signaux avec le dispositif de télécopie de côté réception (2) avant le début d'une transmission de message et de plus transmettre les données chiffrées et des informations de déchiffrement incluant des informations indicatrices d'un type du signal appliqué à une génération de cryptographe au dispositif de télécopie de côté réception (2), dans lequel
la partie opérationnelle (11) affiche un écran de paramétrage de crypto-communication (S1) et accepte un paramétrage d'un niveau dans une communication cryptographique sur la base d'une opération dans l'écran de paramétrage de crypto-communication (S1),
la partie de génération de données de transmission (15) génère des données de message incluant un code de détection d'erreur,
étant donné un paramétrage dans la partie opérationnelle (11) dans lequel une communication cryptographique est exécutée à un niveau moyen prédéterminé,
la partie de génération de clé de chiffrement (16) génère une clé de chiffrement en effectuant la première opération arithmétique en faisant usage de la clé commune et de la valeur de signal du signal appliqué à une génération de cryptographe,
la partie de communication (13) transmet, au dispositif de télécopie de côté réception (2), les informations de déchiffrement incluant des informations indicatrices du type du signal appliqué à une génération de cryptographe,
étant donné un paramétrage dans la partie opérationnelle (11) dans lequel une communication cryptographique d'un niveau supérieur au niveau moyen prédéterminé est exécutée,
la partie de génération de clé de chiffrement (16) génère une clé de chiffrement en effectuant une deuxième opération arithmétique en faisant usage de la clé commune, de la valeur de signal du signal appliqué à une génération de cryptographe et de la valeur du code de détection d'erreur au sein des données de message, et
la partie de communication (13) transmet, au dispositif de télécopie de côté réception (2), les informations de déchiffrement incluant des informations indicatrices du type du signal appliqué à une génération de cryptographe et des informations indicatrices de la valeur du code de détection d'erreur utilisé pour la génération de la clé de chiffrement.

2. Dispositif de télécopie selon la revendication 1, comprenant en outre
étant donné un paramétrage dans la partie opérationnelle (11) dans lequel une communication cryptographique d'un niveau supérieur au niveau moyen prédéterminé est exécutée,
une partie de traitement OCR (14) pour soumettre des données d'image à un traitement OCR pour reconnaître des caractères et des symboles contenus dans les données d'image ; et
une partie de décision (10, 10a) pour décider si un mot-clé stocké dans la partie de stockage (12) est ou non contenu dans des chaînes de caractères et des chaînes de symboles reconnues par la partie de traitement OCR (14), dans lequel
lorsque la partie de décision (10, 10a) décide que le mot-clé est contenu dans les données d'image,
la partie de génération de clé de chiffrement (16) génère une clé de chiffrement en effectuant la deuxième opération arithmétique en faisant usage de la clé commune, d'une valeur de signal du signal appliqué à une génération de cryptographe et de la valeur du code de détection d'erreur au sein des données de message,
lorsque la partie de décision (10, 10a) décide que le mot-clé n'est pas contenu dans les données d'image,
la partie de génération de clé de chiffrement (16) génère une clé de chiffrement en effectuant la première opération arithmétique en faisant usage de la clé commune et de la valeur de signal du signal appliqué à une génération de cryptographe et sans faire usage du code de détection d'erreur.

3. Dispositif de télécopie selon la revendication 2, dans lequel
étant donné un paramétrage dans lequel une communication cryptographique d'un niveau supérieur au niveau moyen prédéterminé est exécutée, la partie opérationnelle (11) accepte un paramétrage dans lequel la partie de génération de clé de chiffrement (16) est faite pour toujours générer une clé de chiffrement en faisant usage de la clé commune, d'une valeur de signal du signal appliqué à une génération de cryptographe et d'une valeur du code de détection d'erreur sans décider si le mot-clé est ou non contenu.

4. Dispositif de télécopie selon la revendication 2 ou 3, dans lequel
la partie opérationnelle (11) accepte l'entrée d'un nouveau paramétrage du mot-clé, et
la partie de stockage (12) stocke dans celle-ci le mot-clé nouvellement paramétré.

5. Dispositif de télécopie selon l'une quelconque des revendications 1 à 4, dans lequel
la partie de génération de clé de chiffrement (16) utilise l'un quelconque ou une pluralité d'un signal NSF, d'un signal CSI et d'un signal DIS comme la partie de génération de clé de chiffrement.

6. Dispositif de télécopie selon l'une quelconque des revendications 1 à 5, dans lequel
étant donné un paramétrage dans la partie opérationnelle (11) dans lequel une communication cryptographique d'un niveau inférieur au niveau moyen prédéterminé est exécutée,
la partie de chiffrement (17) effectue le chiffrement des données de message en faisant usage de la clé commune et sans faire usage du signal appliqué à une génération de cryptographe et de la valeur du code de détection d'erreur pour générer des données chiffrées, et
la partie de communication (13) transmet, au dispositif de télécopie de côté réception (2), les informations de déchiffrement incluant une notification qu'un chiffrement a été réalisé avec la clé commune.

7. Système de communication par télécopie incluant un dispositif de télécopie (1) selon l'une quelconque des revendications 1 à 6, et un dispositif de télécopie de côté réception (2),
**caractérisé en ce que** dispositif de télécopie de côté réception (2) inclut :
une partie de communication (23) pour effectuer une transmission et une réception avec un dispositif de télécopie de côté transmission (1) et recevoir les données chiffrées, chiffrées par le dispositif de télécopie de côté transmission (1) ainsi que les informations de déchiffrement ;
une partie de stockage (22) pour stocker dans celle-ci une même clé commune que dans le dispositif de télécopie de côté transmission (1) ;
une partie de génération de clé de déchiffrement (28) pour générer une clé de déchiffrement en effectuant une opération arithmétique prédéterminée en faisant usage de la clé commune et d'une valeur de signal du signal appliqué à une génération de cryptographe indiqué par les informations de déchiffrement, et
une partie de déchiffrement (29) pour déchiffrer les données chiffrées en faisant usage de la clé de déchiffrement générée par la partie de génération de clé de déchiffrement (28).

8. Système de communication par télécopie selon la revendication 7, dans lequel
lorsque la partie de communication (23) du dispositif de télécopie de côté réception (2) reçoit, du dispositif de télécopie de côté transmission (1), les informations de déchiffrement incluant des informations indicatrices d'un type du signal appliqué à une génération de cryptographe utilisé pour la génération d'une clé de chiffrement par le dispositif de télécopie de côté transmission (1) ainsi que des informations indicatrices d'une valeur du code de détection d'erreur utilisé par le dispositif de télécopie de côté transmission (1), et
la partie de génération de clé de déchiffrement (28) génère une clé de déchiffrement en effectuant une opération arithmétique prédéterminée en faisant usage de la clé commune, d'une valeur de signal du signal appliqué à une génération de cryptographe indiqué par les informations de déchiffrement, et d'une valeur du code de détection d'erreur indiqué par les informations de déchiffrement.

9. Système de communication par télécopie selon la revendication 7, dans lequel
lorsqu'aucune donnée indicatrice d'un signal appliqué à une génération de cryptographe n'est contenue dans des informations de déchiffrement reçues, la partie de génération de clé de déchiffrement (28) paramètre la clé commune stockée dans la partie de stockage (22) comme la clé de déchiffrement.

10. Procédé de commande de dispositif de télécopie comprenant les étapes de :
acceptation d'un paramétrage relatif à une communication cryptographique ;
stockage d'une même clé commune que dans un dispositif de télécopie de côté réception (2) ;
génération de données de message en soumettant des données d'image à un processus de codage pour communication par télécopie ;
génération d'une clé de chiffrement en sélectionnant, comme un/des signal/signaux appliqué(s) à une génération de cryptographe, un ou plusieurs types de signaux parmi des signaux transmis au et reçus du dispositif de télécopie de côté réception (2) et notification d'un nombre ou d'une fonction au dispositif de télécopie de côté réception (2) et de plus exécution d'une première opération arithmétique en faisant usage de la clé commune et d'une valeur de signal du signal appliqué à une génération de cryptographe ;
génération de données chiffrées des données de message en faisant usage de la clé de chiffrement générée ;
exécution d'une transmission et d'une réception de signaux avec le dispositif de télécopie de côté réception (2) avant le début d'une transmission de message et de plus transmission des données chiffrées et d'informations de déchiffrement incluant des informations indicatrices d'un type du signal appliqué à une génération de cryptographe au dispositif de télécopie de côté réception (2) ;
affichage d'un écran de paramétrage de crypto-communication (S1);
acceptation d'un paramétrage d'un niveau de communication cryptographique sur la base d'une opération dans l'écran de paramétrage de crypto-communication (S1),
génération de données de message incluant un code de détection d'erreur,
étant donné un paramétrage dans lequel une communication cryptographique est exécutée à un niveau moyen prédéterminé,
génération d'une clé de chiffrement en effectuant la première opération arithmétique en faisant usage de la clé commune et de la valeur de signal du signal appliqué à une génération de cryptographe, et
transmission, au dispositif de télécopie de côté réception (2), des informations de déchiffrement incluant des informations indicatrices du type du signal appliqué à une génération de cryptographe, et
étant donné un paramétrage dans lequel une communication cryptographique d'un niveau supérieur au niveau moyen prédéterminé est exécutée,
génération d'une clé de chiffrement en effectuant une deuxième opération arithmétique en faisant usage de la clé commune, de la valeur de signal du signal appliqué à une génération de cryptographe et de la valeur du code de détection d'erreur au sein des données de message, et
transmission, au dispositif de télécopie de côté réception (2), des informations de déchiffrement incluant des informations indicatrices du type du signal appliqué à une génération de cryptographe et des informations indicatrices de la valeur du code de détection d'erreur utilisé pour la génération de la clé de chiffrement.
